Europäisches Patentamt

European Patent Office

Office européen des brevets

(19)

(11) Veröffentlichungsnummer: **0 088 434**
**B1**

(12) # EUROPÄISCHE PATENTSCHRIFT

(45) Veröffentlichungstag der Patentschrift:
**04.06.86**

(51) Int. Cl.⁴: **F 16 B  13/04**

(21) Anmeldenummer: **83102272.8**

(22) Anmeldetag: **08.03.83**

(54) **Dübel zum Befestigen von Gegenständen an Bauteilen.**

(30) Priorität: **09.03.82  DE 3208461**

(43) Veröffentlichungstag der Anmeldung:
**14.09.83 Patentblatt 83/37**

(45) Bekanntmachung des Hinweises auf die Patenterteilung:
**04.06.86 Patentblatt 86/23**

(84) Benannte Vertragsstaaten:
**AT CH FR GB LI NL SE**

(56) Entgegenhaltungen:
**CH - A - 428 329**
**CH - A - 463 882**
**CH - A - 598 497**
**DE - A - 3 017 801**
**DE - C - 822 010**
**DE - U - 1 926 515**
**FR - A - 2 351 297**
**GB - A - 1 603 241**
**US - A - 2 236 079**

(73) Patentinhaber: **HILTI Aktiengesellschaft,**
**FL-9494 Schaan (LI)**

(72) Erfinder: **Sick, Hans Hermann, Ettalstrasse 44,**
**D-8000 München 70 (DE)**
Erfinder: **Richter, Hanno, Ing. grad., Lannerstrasse 5,**
**D-8025 Unterhaching (DE)**

(74) Vertreter: **Wildi, Roland, Hilti Aktiengesellschaft**
**Patentabteilung, FL-9490 Schaan (LI)**

ACTORUM AG

## Beschreibung

Die Erfindung betrifft einen Dübel zum Befestigen von Gegenständen an Bauteilen, mit einem unter axialer Stauchung radial aufweitbaren Spreizteil und einem Gegenlager, das einen die zu befestigenden Gegenstände wenigstens teilweise durchsetzenden Schaft und eine den Schaft radial überragende, sich auf den zu befestigenden Gegenständen abstützende Schulter aufweist.

Zum Befestigen plattenartiger Gegenstände an Bauteilen ist ein Dübel bekannt (DE-A-3 017 801), der aus einem hülsenförmigen Spreizteil und einem im wesentlichen rohrförmigen Gegenlager besteht, wobei das Spreizteil und das Gegenlager von einem diese zusammenhaltenden Zugdorn durchgriffen sind.

Für den Befestigungsvorgang wird der Dübel in sich deckende Aufnahmeöffnungen des zu befestigenden Gegenstandes bzw. Bauteiles eingeschoben, wobei sich eine als Kopf ausgebildete Schulter des Gegenlagers am zu befestigenden Gegenstand abstützt. Durch anschliessendes Zurückziehen des Zugdorns entgegen der Einführrichtung des Dübels, was mittels einer sich am Gegenlager abstützenden Zugvorrichtung erfolgt, wird das Spreizteil axial gestaucht und dadurch radial geweitet. Das geweitete Spreizteil legt sich gegen die ihm zugewandte Seite des Bauteils. Der am freien Ende des Spreizteils über einen Kopf angreifende Zugdorn wird in der zurückgezogenen Position axial arretiert. Hierzu dient ein sich schulterseitig abstützender Ring, der sich unter plastischer Verformung durch den Gegendruck der Zugvorrichtung in einen umlaufenden Einstich des Zugdorns einlegt.

Ein erheblicher Nachteil dieses bekannten Dübels besteht darin, dass für unterschiedliche Befestigungsdicken nebst Gegenlager mit unterschiedlichen Baulängen auch unterschiedlich lange Zugdorne bereitgehalten werden müssen. Hinzu kommt ferner der Nachteil, dass der Zugdorn zur Beibehaltung der Befestigung stets im Spreizteil bzw. Gegenlager bleiben muss, so dass es grundsätzlich nicht möglich ist, diese Dübelart als sogenannten Innengewindedübel einzusetzen.

Der Erfindung liegt die Aufgabe zugrunde, einen Dübel zur hintergreifenden Befestigung zu schaffen, der sich durch einfachen Aufbau und Anpassbarkeit an unterschiedliche Befestigungsdicken auszeichnet.

Erfindungsgemäss wird die Aufgabe dadurch gelöst, dass das Spreizteil und das Gegenlager über eine Zugkräfte aufnehmende, einfach lösbare Verbindungseinrichtung miteinander verbunden sind.

Die erfindungsgemässe Verbindungseinrichtung zwischen Spreizteil und Gegenlager hält diese Teile für das Einschieben derselben in die Aufnahmeöffnungen zu einer Einheit zusammen und nimmt die während sowie nach dem Befestigungsvorgang auftretenden Zugspannungen zwischen Spreizteil und Gegenlager auf. Zum Setzen des Dübels wird ein am einführrichtungsseitigen Ende des Spreizteils angreifender Zugdorn einer sich am Gegenlager abstützenden Zugvorrichtung entgegen der Einführrichtung des Dübels gezogen, so dass es durch axiale Stauchung zum radialen Weiten des Spreizteils und damit zur Anlage desselben am Bauteil unter Spannung kommt. Anschliessend wird der Zugdorn dem Dübel entnommen, worauf dieser beispielsweise auch zur Aufnahme einer Ankerstange geeignet ist.

Zur Verwendung des Dübels für stark unterschiedliche Befestigungsdicken ist nur ein entsprechend langes Gegenlager bereitzuhalten bzw. mit dem Spreizteil in Verbindung zu bringen. Kleinere Unterschiede der Befestigungsdicke lassen sich durch unterschiedlich starkes axiales Stauchen des Spreizteils ausgleichen.

Vorzugsweise ist die Verbindungseinrichtung an die einander benachbarten Endbereiche von Spreizteil und Gegenlager angeordnet. Auf diese Weise lässt sich ein einfacher, sicherer, den Weitungsvorgang des Spreizteils nicht hindernder Verbund von Spreizteil und Gegenlager erreichen.

Die Verbindungseinrichtung kann beispielsweise durch am Spreizteil und Gegenlager angreifende Bügel gebildet sein. Ebenso eignet sich hierzu ein Bajonetteingriff des Spreizteils in das Gegenlager. Als besonders vorteilhafte Ausbildungsform der Verbindungseinrichtung haben sich jedoch miteinander hakenartig verrastbare Ringwulste bewährt.

Da es sich als zweckmässig erwiesen hat, den Schaft des Gegenlagers grösser als den äusseren Ausgangsdurchmesser des Spreizteils zu halten, weisen die spreizteilseitigen Ringwulste zweckmässig radial nach aussen und verhaken sich so an korrespondierend nach innen gerichteten Ringwulsten des Gegenlagers. An den spreizteilseitigen, mit dem Gegenlager verhakten Ringwulsten kann sich das Gehäuse der Zugvorrichtung abstützen, während der geräteseitige Zugdorn das Spreizteil staucht.

Nach einem weiteren Vorschlag der Erfindung sind zur radialen Federung im Bereich wenigstens eines der Ringwulste Längsschlitze vorgesehen. Auf diese Weise wird das Zusammenfügen von Spreizteil und Gegenlager vereinfacht, indem die Ringwulste nach dem Zusammenschieben der besagten Teile miteinander selbsttätig verrasten.

Die Erfindung wird nachstehend anhand einer Zeichnung, die ein Ausführungsbeispiel wiedergibt, näher erläutert. Es zeigen:

Fig. 1 einen in Aufnahmeöffnungen eingeführten Dübel mit einer Zugvorrichtung, vor dem Aufweiten des Spreizteils,

Fig. 2 den Dübel nach Fig. 1 mit der Zugvorrichtung, nach erfolgtem Aufweiten des Spreizteils.

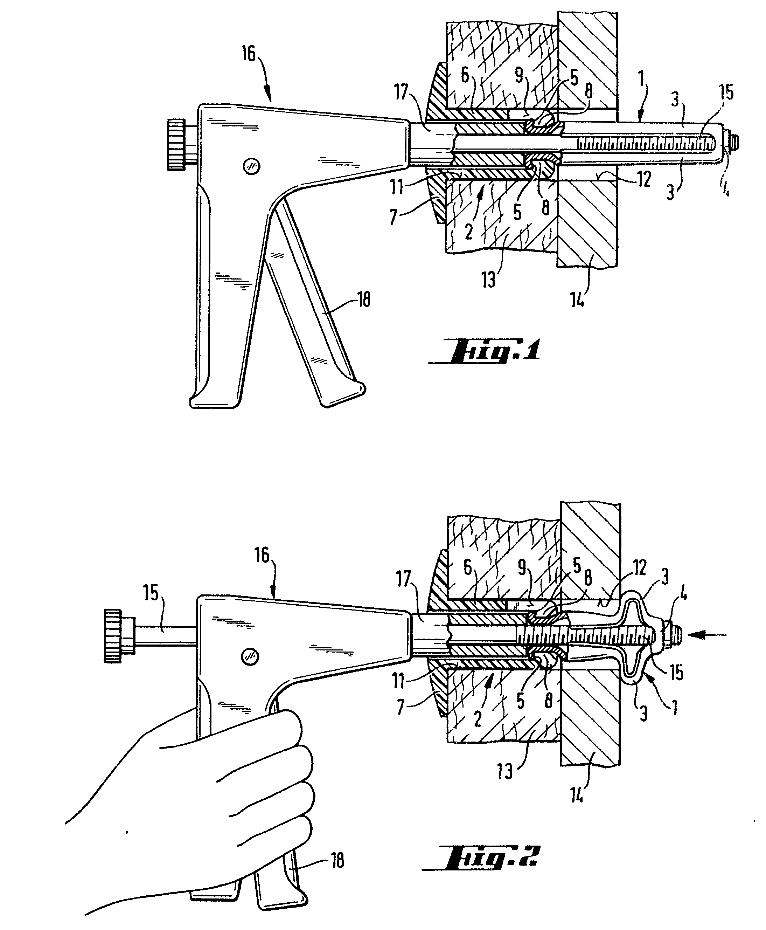

Der in Fig. 1 dargestellte Dübel besteht aus einem insgesamt mit 1 bezeichneten Spreizteil und einem insgesamt mit 2 bezeichneten Gegenlager.

Das Spreizteil 1 weist zwei einander gegenüberliegende Schenkel 3 auf, die über eine mit einem Innengewinde versehene Brücke 4 an einem Ende miteinander verbunden sind. In dem der Brücke 4 gegenüberliegenden Endbereich ragen von den Schenkeln 3 zwei hakenartige Ringwulste 5 ab.

Das Gegenlager 2 besteht aus Kunststoff und setzt sich aus einem Schaft 6 sowie einer an diesen angeformten kopfartigen Schulter 7 zusammen. Das freie Ende des Schaftes 6 trägt zwei radial nach innen gerichtete Ringwulste 8, mit denen die Ringwulste 5 des Spreizteils 1 verhakt sind. Um das zur Verhakung führende Ineinanderschieben von Spreizteil 1 und Gegenlager 2 zu erleichtern, weist der Schaft 6 im Bereich der Ringwulste 8 Längsschlitze 9 auf. Diese bewirken ein elastisches Auffedern des die Ringwulste 8 tragenden Schaftabschnittes beim Eintritt des Spreizteils 2 bzw. dessen Ringwulste 5.

Der Dübel wird, wie die Fig. 1 zeigt, zum Befestigungszwecke in sich deckende Aufnahmeöffnungen 11, 12 eines zu befestigenden plattenförmigen Gegenstandes 13 bzw. eines Bauteils 14 eingeführt. Die Schenkel 3 überragen dabei die freiliegende Seite des Bauteils 14. In die Brücke 4 bzw. deren Innengewinde ragt ein Zugdorn 15 einer insgesamt mit 16 bezeichneten Zugvorrichtung. Ein Stützrohr 17 der Zugvorrichtung 16 legt sich gegen die Stirnseite der spreizteilseitigen Ringwulste 5 an.

Zur Erzielung der Befestigung wird die Zugvorrichtung 16 über deren Handgriff 18, wie der Fig. 2 entnehmbar ist, betätigt. Dadurch verschiebt sich der Zugdorn 15 entgegen der Einführrichtung des Dübels – es kommt zur axialen Stauchung und radialen Weitung der Schenkel 3. Letztere legen sich auf diese Weise gegen die freiliegende Fläche des Bauteils 14. Weiteres Einziehen des Zugdorns 15 bewirkt ein Zusammenspannen des Gegenstandes 13 mit dem Bauteil 14 unter Zusammenwirkung der Schulter 7 mit den aufgeweiteten Schenkeln 3. Die Zugvorrichtung 16 mit dem Zugdorn 15 wird anschliessend vom Dübel entnommen.

**Patentansprüche**

1. Dübel zum Befestigen von Gegenständen (13) an Bauteilen (14), mit einem unter axialer Stauchung radial aufweitbaren Spreizteil (1) und einem Gegenlager (2), das einen die zu befestigenden Gegenstände wenigstens teilweise durchsetzenden Schaft (6) und eine den Schaft radial überragende, sich auf den zu befestigenden Gegenständen abstützende Schulter (7) aufweist, dadurch gekennzeichnet, dass das Spreizteil (1) und das Gegenlager (2) über eine Zugkräfte aufnehmende, einfach lösbare Verbindungseinrichtung miteinander verbunden sind.

2. Dübel nach Anspruch 1, dadurch gekennzeichnet, dass die Verbindungseinrichtung an den einander benachbarten Endbereichen von Spreizteil (1) und Gegenlager (2) angeordnet ist.

3. Dübel nach Anspruch 1 oder 2, dadurch gekennzeichnet, dass die Verbindungseinrichtung durch miteinander hakenartig verrastbare Ringwulste (5, 8) gebildet ist.

4. Dübel nach Anspruch 3, dadurch gekennzeichnet, dass zur radialen Federung im Bereich wenigstens eines der Ringwulste (5, 8) Längsschlitze (9) vorgesehen sind.

**Revendications**

1. Cheville pour fixer des objets (13) sur des éléments de construction (14), comprenant une partie expansible (1) pouvant être élargie radialement quand elle est soumise à un refoulement axial et une butée (2) qui comprend une tige (6) traversant au moins partiellement l'objet à fixer ainsi qu'un épaulement (7) faisant saillie radialement de la tige et s'appuyant sur l'objet à fixer, caractérisée en ce que la partie expansible (1) et la butée (2) sont reliées l'une à l'autre par un dispositif de liaison facilement démontable qui supporte les forces de traction.

2. Cheville selon la revendication 1, caractérisée en ce que le dispositif de liaison est disposé dans les régions d'extrémité mutuellement voisines de la partie expansible (1) et de la butée (2).

3. Cheville selon la revendication 1 ou 2, caractérisée en ce que le dispositif de liaison est constitué par des bourrelets annulaires (5, 8) en forme de crochets pouvant s'enclencher les uns dans les autres.

4. Cheville selon la revendication 3, caractérisée en ce que l'on prévoit des fentes longitudinales (9) dans la région de l'un au moins des bourrelets annulaires (5, 8) pour obtenir une élasticité radiale.

**Claims**

1. A dowel for fastening objects (13) to structural parts (14), comprising part (1) which is radially expansible under axial compression and an abutment (2) which has a shaft (6) at least partially penetrating the object to be fastened and a shoulder (7) which projects radially beyond the shaft and is supported on the object to be fastened, characterised in that the expansion part (1) and the abutment (2) are connected to one another by way of a connecting mechanism which absorbs tensile forces and which is simple to release.

2. A dowel according to claim 1, characterised in that the connecting mechanism is arranged on the end region, adjacent to one another, of the expansion part (1) and the abutment (2).

3. A dowel according to claim 1 or 2, characterised in that the connecting mechanism is formed by annular beads (5, 8) which are engageable with one another in a hook-like manner.

4. A dowel according to claim 3, characterised in that for radial deflection longitudinal slots (9) are provided in the region of at least one of the annular beads (5, 8).

Fig.1

Fig.2